# EUROPÄISCHE PATENTSCHRIFT

(11) **EP 3 741 600 B1**
(45) Veröffentlichungstag und Bekanntmachung des Hinweises auf die Patenterteilung: **06.07.2022**
(21) Anmeldenummer: 20174108.9
(22) Anmeldetag: 12.05.2020
(51) Int. Cl.: B60K 1/04, B62D 21/15, B62D 25/20

(54) **MODULARES BATTERIEBAUGRUPPENSYSTEM**
MODULAR BATTERY ASSEMBLY SYSTEM
SYSTÈME MODULAIRE DE MODULES DE BATTERIES

(30) Priorität: 21.05.2019 DE 102019207451
(43) Veröffentlichungstag der Anmeldung: 25.11.2020
(73) Patentinhaber: VOLKSWAGEN AG, 38440 Wolfsburg (DE)
(72) Erfinder: Dupper, Denis, 38518 Gifhorn (DE)

(56) Entgegenhaltungen:
- DE-A1-102012 001 596
- DE-A1-102012 017 879
- DE-A1-102014 017 177

## Beschreibung

Die Erfindung betrifft ein modulares Batteriebaugruppensystem mit einer Batteriebaugruppe für den Einbau in einen Batteriebauraum einer Kraftfahrzeugkarosserie, aufweisend ein Batteriegehäuse, in welchem eine Anzahl von Batteriemodulen aufgenommen ist. Die Erfindung betrifft weiterhin ein elektrisch angetriebenes oder antreibbares Kraftfahrzeug, insbesondere ein Hybrid- oder Elektrofahrzeug.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt. Zur Erzeugung oder Bereitstellung einer ausreichend hohen Betriebsspannung weisen solche Fahrzeugbatterien typischerweise mindestens ein Batteriemodul auf, bei welchem mehrere einzelne Batteriezellen modular verschaltet sind.

Bei der Herstellung elektrisch angetriebener oder antreibbarer Kraftfahrzeuge ist es beispielsweise möglich, modulare Baukastensysteme für das elektrische Antriebssystem und/oder die Fahrzeugbatterie, wie beispielsweise den sogenannten modularen E-Antriebs-Baukasten (MEB) zu verwenden, um somit die Flexibilität und Effizienz beim Fahrzeugbau zu verbessern.

Ein derartiges Baukastensystem für die Fahrzeugbatterie weist mehrere unterschiedliche Batteriebaugruppen für die verschiedenen (Batterie-)Leistungsstufen auf, welche jeweils eine unterschiedliche Batteriegröße aufweisen. Unter der Batteriegröße ist hierbei insbesondere der Bauraumbedarf der Batteriebaugruppe, also im Wesentlichen die räumliche Abmessung oder Dimensionierung eines Batteriegehäuses der Batteriebaugruppe zu verstehen, in welchem die Batteriemodule angeordnet sind.

Die Leistungsstufe der Fahrzeugbatterie beziehungsweise der Batteriebaugruppe ist hierbei im Wesentlichen von der Anzahl der gekoppelten Batteriemodule abhängig. Mit anderen Worten weist eine Batteriebaugruppe mit hoher Leistungsstufe eine vergleichsweise hohe Anzahl von Batteriemodulen, beispielsweise zwölf Batteriemodule, in einem vergleichsweise großen Batteriegehäuse auf. Entsprechend weist eine Batteriebaugruppe mit niedrigerer Leistungsstufe eine reduzierte Anzahl von Batteriemodulen, beispielsweise sieben, acht oder neun Batteriemodule auf, welche in einem vergleichsweise kleinen Batteriegehäuse angeordnet sind.

Für den Einsatz solcher Baukastensysteme ist es daher notwendig, dass Batteriebaugruppen unterschiedlicher Batteriegröße in den gleichen Batteriebauraum einbaubar sind. Dies bedeutet, dass ein Batteriebauraum einer Kraftfahrzeugkarossiere, in welchen eine Batteriebaugruppe eingebaut oder montiert werden soll, stets für die größte Leistungsstufe des Baukastensystems ausgelegt sein muss. Das Batteriegehäuse der Batteriebaugruppe mit der höchsten Leistungsstufe füllt somit den vorhandenen Batteriebauraum im Wesentlichen vollständig aus, wobei ein Batteriegehäuse einer Batteriebaugruppe einer im Vergleich hierzu reduzierten Leistungsstufe, den vorhandenen Batteriebauraum nicht vollständig ausfüllt. Dadurch ist eine Lücke oder ein Freiraum, also ein nicht gefüllter, lichter Abstand, zwischen dem Batteriegehäuse der niedrigeren Leistungsstufe und dem Rand (der Innenwand) des vorhandenen Batteriebauraums gebildet oder freigestellt. Dadurch ist eine Anbindung des Batteriegehäuses der niedrigeren Leistungsstufe an die Kraftfahrzeugkarosserie nicht vollumfänglich möglich, wodurch im Falle eines Fahrzeugunfalls oder eines Fahrzeugaufpralls (Fahrzeugcrashs) die mechanische Strukturintegrität der Karosserie beziehungsweise des Batteriebauraums nachteilig reduziert wird. Dies bewirkt weiterhin eine nachteilige Reduzierung der Torsionssteifigkeit, insbesondere der Seitenaufprallfestigkeit, des Kraftfahrzeugs. Die reduzierte Torsionssteifigkeit wirkt sich hierbei insbesondere nachteilig auf das Fahrverhalten und auf den Fahrkomfort sowie auf die Haltbarkeit des Kraftfahrzeugs aus.

Aus der DE 10 2015 213 860 A1 ist eine Batterieanordnung für eine Traktionsbatterie bekannt. Die Traktionsbatterie weist hierbei eine doppel-T-Form auf, welche einen mittleren, sich in Fahrzeuglängsrichtung erstreckenden ersten Batteriebereich, und vier sich beidseitig hiervon in Fahrzeugquerrichtung erstreckenden zweiten Batteriebereich, aufweist. Zur Verbesserung der Seitenaufprallfestigkeit der Traktionsbatterie sind Versteifungselemente vorgesehen, welche die inneren Eckbereiche der doppel-T-Form zwischen den Batteriebereichen mechanisch versteifen.

In der DE 10 2013 008 428 A1 ist eine Anordnung zur Lagerung einer Fahrzeugbatterie beschrieben, bei welcher entlang zweier gegenüberliegender, sich in Fahrzeuglängsrichtung erstreckender, Längsseiten eines Batteriegehäuses jeweils ein Deformationselement zwischen dem Batteriegehäuse und einer Kraftfahrzeugkarosserie angeordnet sind.

Die DE 10 2012 021 857 A1 offenbart eine Schutzanordnung zum Schutz einer Fahrzeugbatterie in einer Kraftfahrzeugkarosserie, bei welcher zur Bildung des Batteriebauraums zwei in Fahrzeugquerrichtung verlaufende Querabstützungen und in Fahrzeuglängsrichtung verlaufende Längsabstützung vorgesehen sind. Eine Querabstützung ist hierbei als eine Schutzwand ausgebildet, wobei die übrigen Abstützungen ein Fachwerk ausbilden.

In der DE 10 2012 017 879 A1 ist eine Batterieanordnung mit einer Traktionsbatterie beschrieben, welche am Fahrzeugrohbau über zumindest einen Halter fest angebunden ist, und einem Führungsmittel, mit dem die Traktionsbatterie im Seitencrashfall in der Fahrzeugquerrichtung verlagerbar ist. Hierbei ist zur Ausbildung des Führungsmittels der Halter in vordefinierter Weise in der Fahrzeugquerrichtung plastisch defomierbar gestaltet.

Die DE 10 2012 001 596 A1 offenbart ein Fahrzeug mit einer Batterie, welche ein Batteriegehäuse mit einer Anzahl elektrisch verschalteter Einzelzellen aufweist, wobei mindestens ein Energie absorbierendes Schutzelement an dem Batteriegehäuse vorgesehen ist. Das zumindest eine Schutzelement ist mit wenigstens einem Medium befüllbar oder permanent mit dem wenigstens einem Medium befüllt.

Aus der DE 10 2014 017 177 A1 ist ein Befestigungsrahmen mit einer Rahmenstruktur zur Aufnahme einer elektrischen Batterie bekannt. Hierbei sind zwei identisch ausgebildete Rahmenelemente vorgesehen, welche derart ausgebildet und zur Bildung der Rahmenstruktur derart in verschiedenen Positionen zueinander anordbar und miteinander verbindbar sind, dass elektrische Batterien mit unterschiedlich großen Abmessungen von der Rahmenstruktur aufnehmbar sind.

Der Erfindung liegt die Aufgabe zugrunde, eine besonders geeignete Batteriebaugruppe für den Einbau in einen Batteriebauraum einer Kraftfahrzeugkarosserie anzugeben. Erfindungsgemäß ist eine Batteriebaugruppe angegeben werden, welche auch für kleine Batteriegrößen im Einbau- oder Montagezustand eine möglichst hohe mechanische Strukturintegrität und Torsionssteifigkeit der Kraftfahrzeugkarosserie gewährleistet. Der Erfindung liegt weiterhin die Aufgabe zugrunde, ein besonders geeignetes elektrisch angetriebenes oder antreibbares Kraftfahrzeug mit einer solchen Batteriebaugruppe, sowie ein besonders geeignetes modulares Batteriebaugruppensystem als Baukastensystem anzugeben. Hinsichtlich der Batteriebaugruppe wird die Aufgabe mit den Merkmalen des Anspruchs 1 und hinsichtlich des Kraftfahrzeugs mit den Merkmalen des Anspruchs 9 erfindungsgemäß gelöst. Vorteilhafte Ausgestaltungen und Weiterbildungen sind Gegenstand der jeweiligen Unteransprüche. Die im Hinblick auf die Batteriebaugruppe angeführten Vorteile und Ausgestaltungen sind sinngemäß auch auf das Kraftfahrzeug und/oder das Batteriebaugruppensystem übertragbar und umgekehrt.

Die erfindungsgemäße Batteriebaugruppe ist für den Einbau in einen Batteriebauraum einer Kraftfahrzeugkarosserie geeignet und eingerichtet. Die Batteriebaugruppe ist hierbei Teil eines modularen Batteriebaugruppensystems, also eines Baukastensystems für Fahrzeugbatterien.

Die Batteriebaugruppe weist ein Batteriegehäuse auf, in welchem eine Anzahl von Batteriemodulen aufgenommen ist. Das Batteriegehäuse weist entlang einer Fahrzeuglängsrichtung eine geringere Abmessung als der vorhandene Batteriebauraum auf, so dass ein Freiraum, also ein lichter Abstand zwischen dem Batteriegehäuse und einer Seitenwand des Batteriebauraums, gebildet oder freigestellt ist. Der Freiraum ist also eine Lücke oder ein nicht gefüllter (Teil-)Bereich des Batteriebauraums. Mit anderen Worten weist die Batteriebaugruppe beziehungsweise das Batteriegehäuse eine im Vergleich zu den Abmessungen des Batteriebauraums reduzierte Baugröße oder Batteriegröße auf. Der Freiraum ist hierbei entlang der Fahrzeuglängsrichtung in einem hinteren Ende des Batteriebauraums oder Kraftfahrzeugkarossiere, also im Bereich der Fahrzeughinterräder, angeordnet.

Erfindungsgemäß ist ein Schubfeldelement als flächige Überbrückung und Versteifung des Freiraums vorgesehen. Dies bedeutet, dass das Schubfeldelement im Montage- oder Einbauzustand in den Freiraum eingesetzt ist. Unter einer Überbrückung ist hierbei insbesondere eine kraftübertragende Verbindung zwischen dem Batteriegehäuse und einer Seitenwand des Batteriebauraums, also der Kraftfahrzeugkarossiere, zu verstehen. Das Schubfeldelement bewirkt somit einen zusätzlichen Kraftpfad im Falle eines Fahrzeugunfalls oder Fahrzeugaufpralls, wodurch eine hohe mechanische Strukturintegrität und Torsionssteifigkeit der Kraftfahrzeugkarosserie gewährleistet ist. Dadurch ist eine besonders geeignete Batteriebaugruppe realisiert.

Durch das Schubfeldelement ist eine kostengünstige und gewichtsreduzierte sowie bauraumgeeignete Überbrückung und Versteifung des freien Batteriebauraums (Freiraums) realisiert.

Im Nachfolgenden sind Angaben hinsichtlich der Raumrichtungen auch insbesondere in einem Koordinatensystem des Kraftfahrzeugs (Fahrzeugkoordinatensystem) bezüglich einer beispielhaften Einbausituation der Batteriebaugruppe in einem untergrundseitig an der Kraftfahrzeugkarosserie angeordneten Batteriebauraum angegeben. Die Abszissenachse (X-Achse, X-Richtung) ist hierbei entlang der Fahrzeuglängsrichtung (Fahrrichtung) und die Ordinatenachse (Y-Achse, Y-Richtung) entlang der Fahrzeugquerrichtung sowie die Applikatenachse (Z-Achse, Z-Richtung) entlang der Fahrzeughöhe orientiert.

Der Batteriebauraum ist beispielsweise untergrundseitig geöffnet und von einem Fahrzeug-Unterboden begrenzt. Mit anderen Worten ist die Batteriebaugruppe von der Fahrzeugunterseite her montierbar oder einbaubar. Das ebene oder gekrümmte Schubfeldelement überträgt hierbei insbesondere in einer XY-Ebene wirkende Schublasten, und wirkt sich somit positiv auf die Biegedrillknickbeanspruchbarkeit des stabilitätsgefährdeten Freiraums aus, wodurch die mechanische Strukturintegrität und die Torsionssteifigkeit der Kraftfahrzeugkarosserie verbessert wird.

In einer vorteilhaften Ausführung ist das Schubfeldelement an dem Batteriegehäuse und/oder der Kraftfahrzeugbatterie schraubbefestigt oder schraubbefestigbar. Dies bedeutet, dass das Schubfeldelement kraftschlüssig an dem Batteriegehäuse und/oder der Kraftfahrzeugbatterie fixiert ist.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Unter einem "Kraftschluss" oder einer "kraftschlüssigen Verbindung" zwischen wenigstens zwei miteinander verbundenen Teilen wird hier und im Folgenden insbesondere verstanden, dass die miteinander verbundenen Teile aufgrund einer zwischen ihnen wirkenden Reibkraft gegen ein Abgleiten aneinander gehindert sind. Fehlt eine diese Reibkraft hervorrufende "Verbindungskraft" (dies bedeutet diejenige Kraft, welche die Teile gegeneinander drückt, beispielsweise eine Schraubenkraft oder die Gewichtskraft selbst), kann die kraftschlüssige Verbindung nicht aufrecht erhalten und somit gelöst werden.

Durch die Schraubbefestigung ist eine einfache, zuverlässige und betriebssichere Befestigung des Schubfeldelements realisiert. Insbesondere ist hierdurch eine zuverlässige krafttechnische Anbindung an das Batteriegehäuse und/oder die Kraftfahrzeugkarosserie realisiert, so dass eine zuverlässige Überbrückung und Versteifung des Freiraums gewährleistet ist. Die Schraubbefestigung erfolgt hierbei vorzugsweise zwei-, drei- oder allseitig, also entlang zweier, dreier oder aller Seitenränder des Schubfeldelements.

In einer zweckmäßigen Weiterbildung ist das Schubfeldelement als ein Schubblech ausgeführt. Dadurch ist eine besonders einfache und kostengünstige Batteriebaugruppe realisiert. Das Schubfeldelement beziehungsweise das Schubblech ist hierbei beispielsweise als ein Stanz-Biege-Teil ausgeführt. Das Schubblecht überbrückt den Freiraum hierbei beispielsweise großflächig.

Das Schubfeldelement beziehungsweise das Schubblech ist beispielsweise aus einem Stahl- oder Aluminiummaterial hergestellt.

In einer besonders stabilen Ausbildung weist das Schubfeldelement eine Rahmenkonstruktion auf, welche zumindest dreiseitig, also entlang zumindest drei Seitenwänden, entlang des Innenumfangs des Freiraums angeordnet ist. Das Schubfeldelement ist somit durch die Rahmenstruktur berandet. Die Rahmenstruktur weist hierbei gedrungene Bauelemente, wie beispielsweise Pfosten, Balken oder Profile, auf, welche eine bezogen auf das übrige Schubfeldelement eine vergleichsweise große Dehnsteifigkeit aufweisen. Dadurch werden einwirkende Längskräfte auf die Rahmenstruktur übertragen.

Alternativ ist es beispielsweise denkbar, dass das Schubfeldelement eine allseitige, also eine vollständig umlaufende Rahmenkonstruktion aufweist.

In einer möglichen Ausgestaltung ist das Schubfeldelement als sich kreuzende Streben oder Zugbänder ausgeführt. Dadurch ist eine besonders materialsparende und kostenreduzierte Ausführung des Schubfeldelements realisiert. Unter einem Zugband oder Spannband ist hierbei insbesondere ein Bauteil zu verstehen, welches Zug- oder Spannkräfte aufnimmt, und eine im Verhältnis zur Länge vergleichsweise geringe Dicke aufweist sowie aufgrund der konstruktiven Ausgestaltung höhere Zug- oder Spannkräfte aufnehmen kann als Druckkräfte. Das Schubfeldelement ist hierbei beispielsweise aus Stahl oder Aluminium oder einem vorgestrecktem Kunststoff hergestellt.

In einer vorteilhaften Weiterbildung ist das Schubfeldelement insbesondere als zwei sich diagonal im Freiraum kreuzende Streben oder Zugbänder ausgeführt. Die Streben oder Zugbänder kreuzen sich hierbei insbesondere als Raumdiagonalen des Freiraums. Dadurch ist eine besonders geeignete Ausgestaltung des Schubfeldelements realisiert.

In einer denkbaren Ausführung ist ein zweites Schubfeldelement als flächige Überbrückung und Versteifung des Freiraums vorgesehen, wobei die Schubfeldelemente entlang einer Fahrzeugquerrichtung zueinander beabstandet angeordnet sind. Mit anderen Worten ist ein zweiteiliges Schubfeld als flächenhafte Konstruktion zur Überbrückung und Versteifung des freien Batteriebauraums vorgesehen. Insbesondere ist es hierbei denkbar, dass je nach Größe der Kraftfahrzeugkarosserie beziehungsweise des Batteriebauraums ein einteiliges oder zweiteiliges Schubfeld als Schubfeldelement vorgesehen ist. Dadurch ist eine besonders flexible Anpassung an unterschiedliche Batteriebauräume möglich.

In einer bevorzugten Anwendung ist die vorstehend beschriebene Batteriebaugruppe in einem Batterieraum einer Kraftfahrzeugkarosserie eines elektrisch angetriebenen oder antreibbaren Kraftfahrzeugs, insbesondere eines Elektro- oder Hybridfahrzeugs, eingebaut oder montiert. Dadurch ist ein besonders geeignetes Kraftfahrzeug realisiert.

Erfindungsgemäß ist es vorhergesehen, dass die vorstehend beschriebene Batteriebaugruppe Teil eines modularen Batteriebaugruppensystems ist. Das als modulares Baukastensystem ausgeführte Batteriebaugruppensystem ist als Fahrzeugbatterieset zur individuellen Anpassung an unterschiedliche Anwendungen und Anforderungen, insbesondere hinsichtlich unterschiedlicher Batterieleistungen, eines elektrisch angetriebenen oder antreibbaren Kraftfahrzeugs bereitgestellt, so dass das System flexibel an eine gewünschte Anwendung angepasst werden kann.

Das erfindungsgemäße Batteriebaugruppensystem umfasst unterschiedliche Batteriebaugruppen, welche sich insbesondere hinsichtlich einer jeweiligen Batterieleistungsstufe unterscheiden. Die Batteriebaugruppen weisen hierbei jeweils ein Batteriegehäuse zur Aufnahme einer jeweiligen Anzahl von Batteriemodulen auf, wobei die Batteriegehäuse höherer Leistungsstufen mehr Batteriemodule, und somit eine größere Batteriegröße aufweisen. Das Batteriebaugruppensystem ist hierbei für den Einbau in einen Batteriebauraum einer Kraftfahrzeugkarosserie eines Kraftfahrzeugs vorgesehen.

Der Batteriebauraum ist hierbei an die Abmessungen und Dimensionierungen der Batteriebaugruppe der höchsten Batterieleistungsstufe angepasst. Mit anderen Worten ist der Batteriebauraum für die Batteriegröße der höchsten Batterieleistungsstufe ausgelegt. Dies bedeutet, dass bei einem Einbau einer solchen (ersten) Batteriebaugruppe der vorhandene Batteriebauraum im Wesentlichen vollständig ausgefüllt ist, es wird also kein Freiraum ausgebildet.

Das Batteriebaugruppensystem umfasst weiterhin mindestens eine (zweite) Batteriebaugruppe einer niedrigeren oder geringeren Batterieleistungsstufe, welche wie die vorstehend beschriebene Batteriebaugruppe ausgeführt ist. Mit anderen Worten wird bei einem Einsatz einer solchen (zweiten) Batteriebaugruppe geringerer Batterieleistungsstufe der vorhandene Freiraum des Batteriebauraums mit einem Schubfeldelement überbrückt und versteift. Dadurch sind eine unproblematische Batteriebaugruppenmontage und - demontage sowie eine flexible Anpassung an unterschiedliche Kunden- oder Anforderungswünsche realisiert, welche gleichzeitig eine hohe mechanische Strukturintegrität und Torsionssteifigkeit der Kraftfahrzeugkarosserie im Einbau- oder Montagezustand gewährleistet.

In einer denkbaren Ausgestaltung weisen die zweiten Batteriebaugruppen hierbei weniger als zwölf Batteriemodule, beispielsweise sieben, acht oder neun Batteriemodule, auf.

Nachfolgend sind Ausführungsbeispiele der Erfindung anhand einer Zeichnung näher erläutert. Darin zeigen:
- Fig. 1: in Draufsicht ein Kraftfahrzeug mit einer Kraftfahrzeugkarosserie und mit einer Batteriebaugruppe einer hohen Batterieleistungsstufe mit Blick auf eine Fahrzeugunterseite,
- Fig. 2: in Draufsicht das Kraftfahrzeug gemäß Fig. 1 mit einer Batteriebaugruppe einer niedrigen Batterieleistungsstufe mit einem Batteriegehäuse und mit einem Schubfeldelement, mit Blick auf eine Fahrzeugunterseite,
- Fig. 3: eine Prinzipdarstellung der Kraftfahrzeugkarosserie mit der Batteriebaugruppe der niedrigen Batterieleistungsstufe ohne Schubfeldelement bei einem Seitenaufprall,
- Fig. 4: eine Prinzipdarstellung der Kraftfahrzeugkarosserie mit der Batteriebaugruppe der niedrigen Batterieleistungsstufe mit Schubfeldelement bei einem Seitenaufprall,
- Fig. 5: in perspektivischer Darstellung das Schubfeldelement in einer ersten Ausführungsform,
- Fig. 6: in perspektivischen Explosionsdarstellung ausschnittsweise die Kraftfahrzeugkarosserie mit dem Schubfeldelement,
- Fig. 7: in perspektivischen Darstellung ausschnittsweise die Kraftfahrzeugkarosserie mit dem Schubfeldelement in einem montierten Zustand,
- Fig. 8: in perspektivischer Darstellung das Schubfeldelement in einer zweiten Ausführungsform,
- Fig. 9: in perspektivischer Darstellung das Schubfeldelement in einer dritten Ausführungsform,
- Fig. 10: in perspektivischer Darstellung die Kraftfahrzeugkarosserie mit zwei Schubfeldelementen in einer vierten Ausführungsform, und
- Fig. 11: in Draufsicht ausschnittsweise die Kraftfahrzeugkarosserie mit zwei Schubfeldelementen in einer fünften Ausführungsform.

Einander entsprechende Teile und Größen sind in allen Figuren stets mit den gleichen Bezugszeichen versehen.

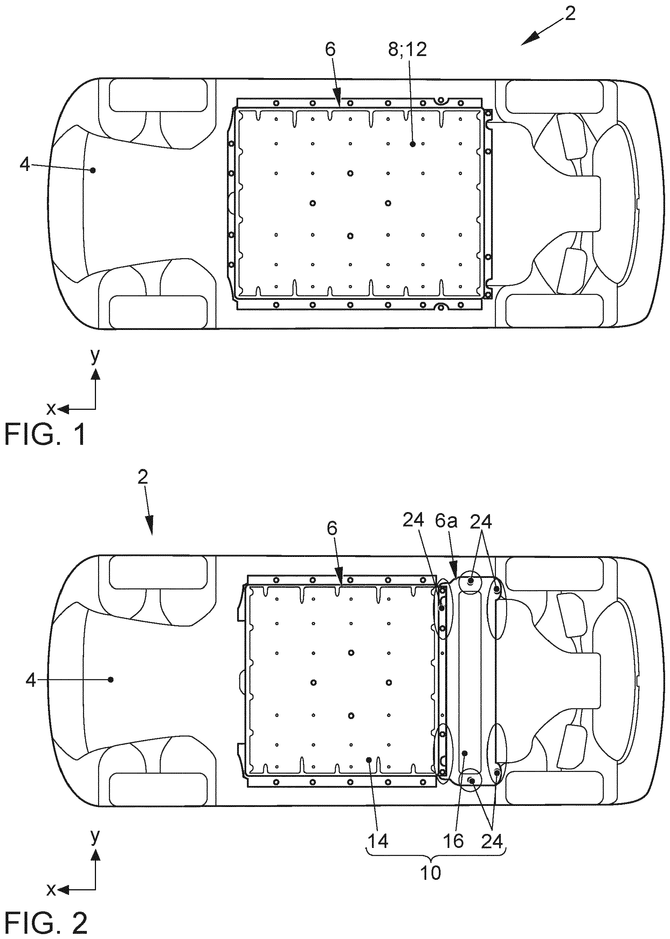

In der Fig. 1 und in der Fig. 2 ist ein nicht näher bezeichnetes Batteriebaugruppensystem als modulares Baukastensystem für Fahrzeugbatterien für den Einbau in einem elektrisch angetriebenen oder antreibbaren Kraftfahrzeug 2 gezeigt. Das Kraftfahrzeug 2 ist hierbei insbesondere ein Elektro- oder Hybridfahrzeug. Das Kraftfahrzeug 2 weist eine Kraftfahrzeugkarosserie 4 mit einem Batteriebauraum 6 auf. Der Batteriebaurau 6 ist hierbei der bestimmungsgemäße Bauraum für den Einbau oder die Montage unterschiedlicher Batteriebaugruppen 8, 10 des Batteriebaugruppensystems. Der Batteriebauraum 6 ist untergrundseitig geöffnet und von einem Fahrzeug-Unterboden begrenzt. Mit anderen Worten sind die Batteriebaugruppen 8, 10 von der Fahrzeugunterseite her montierbar oder einbaubar. Die Batteriebaugruppen 8, 10 sind also Teil des Fahrzeug-Unterbaus.

Die Batteriebaugruppen 8, 10 sind mit unterschiedlichen Batterieleistungsstufen ausgeführt. Die in Fig. 1 gezeigte (erste) Batteriebaugruppe 8 weist hierbei eine hohe Batterieleistungsstufe auf. Die Batteriebaugruppe 8 weist ein Batteriegehäuse 12 auf, in welchem eine hohe Anzahl von nicht näher gezeigten Batteriemodulen eingesetzt ist, beispielsweise zwölf Batteriemodule. Wie in der Fig. 1 vergleichsweise deutlich ersichtlich ist, füllt das Batteriegehäuse 12 den vorhandenen Batteriebauraum 6 der Kraftfahrzeugkarosserie 4 im Wesentlichen vollständig aus. Insbesondere ist der Batteriebauraum 6 der Kraftfahrzeugkarosserie 4 für das Batteriegehäuse 12 der hohen Batterieleistungsstufe dimensioniert. Das Batteriegehäuse 12 ist hierbei vollumfänglich, also allseitig, an die Kraftfahrzeugkarosserie 4 angebunden oder gekoppelt.

Die in der Fig. 2 gezeigte (zweite) Batteriebaugruppe 10 weist eine im Vergleich zur Batteriebaugruppe 8 reduzierte Batterieleistungsstufe auf. Die Batteriebaugruppe 10 weist entsprechend eine geringere Anzahl von Batteriemodulen, also weniger als zwölf Batteriemodule, beispielsweise sieben, acht oder neun Batteriemodule, auf, wodurch ein zugeordnetes Batteriegehäuse 14 eine geringere oder reduzierte Batterie- oder Baugröße aufweist.

Im Nachfolgenden sind Angaben hinsichtlich der Raumrichtungen auch insbesondere in einem Koordinatensystem des Kraftfahrzeugs (Fahrzeugkoordinatensystem) bezüglich einer beispielhaften Einbausituation der Batteriebaugruppe in einem untergrundseitig an der Kraftfahrzeugkarosserie angeordneten Batteriebauraum angegeben. Die Abszissenachse (X-Achse, X-Richtung) ist hierbei entlang der Fahrzeuglängsrichtung (Fahrrichtung) und die Ordinatenachse (Y-Achse, Y-Richtung) entlang der Fahrzeugquerrichtung sowie die Applikatenachse (Z-Achse, Z-Richtung) entlang der Fahrzeughöhe orientiert.

Das Batteriegehäuse 14 weist im Vergleich zu dem Batteriegehäuse 12 eine reduzierte Abmessung entlang der Fahrzeuglängsrichtung X auf. Dadurch wird der gleiche vorhandene Batteriebauraum 6 durch das Batteriegehäuse 14 der Batteriebaugruppe 10 nicht vollständig ausgefüllt. Dies bedeutet, dass ein nicht gefüllter, leerer Teilbereich im Batteriebauraum 6 verbleibt, welcher nachfolgend auch als Freiraum 6a bezeichnet ist. Wie in der Fig. 2 ersichtlich ist, ist der Freiraum 6a hierbei vorzugsweise entlang der Fahrzeuglängsrichtung X in einem hinteren Ende des Batteriebauraums 6 oder Kraftfahrzeugkarossiere 4, also im Bereich des Fahrzeughecks oder der Fahrzeughinterräder, angeordnet.

Im Falle eines Fahrzeugunfalls oder Fahrzeugaufpralls würde ein leerer Freiraum 6a die mechanische Strukturintegrität und die Torsionssteifigkeit der Kraftfahrzeugkarosserie 4 nachteilig beeinflusst, da das Batteriegehäuse 14 nicht allseitig an der Kraftfahrzeugkarosserie 4 koppelbar ist. Zur Vermeidung dieser Nachteile weist die Batteriebaugruppe 10 ein zusätzliches Schubfeldelement 16 auf, welches für den Einbau oder die Montage in den Freiraum 6a vorgesehen ist. Das Schubfeldelement 16 verlängert die Baugröße der Batteriebaugruppe 10 entlang der Fahrzeuglängsrichtung X, und ermöglicht eine stirnseitige Anbindung des Batteriegehäuses 14 an die Kraftfahrzeugkarosserie 4.

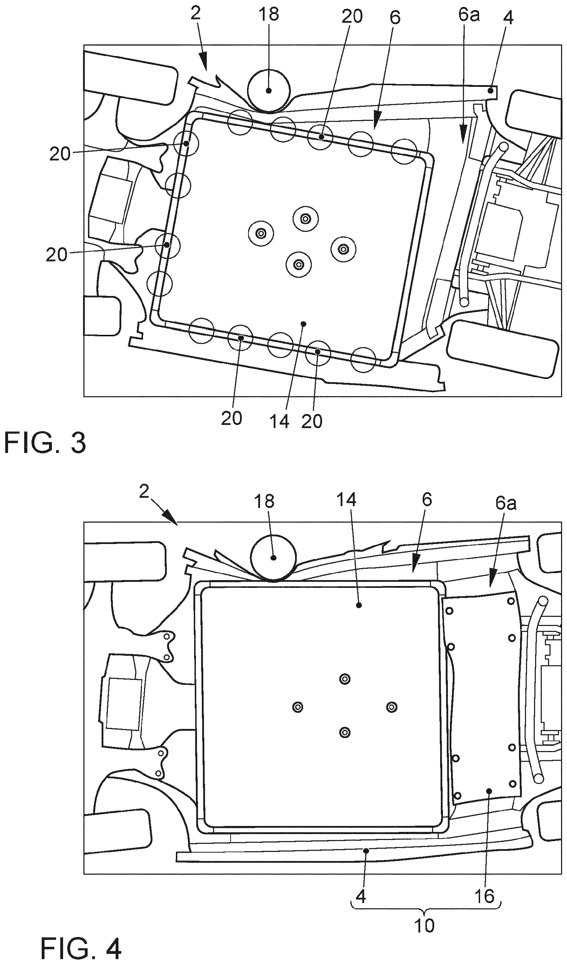

Durch das Schubfeldelement 16 ist eine kostengünstige und gewichtsreduzierte sowie bauraumgeeignete Überbrückung und Versteifung des freien Batteriebauraums (Freiraums) 6a realisiert. Das Schubfeldelement 16 überträgt hierbei insbesondere in einer XY-Ebene wirkende Schublasten, und wirkt sich somit positiv auf die Biegedrillknickbeanspruchbarkeit des stabilitätsgefährdeten Freiraums 6a aus, wodurch die mechanische Strukturintegrität und die Torsionssteifigkeit der Kraftfahrzeugkarosserie 4 wesentlich verbessert wird. Dies ist beispielhaft anhand der Figuren 3 und 4 gezeigt.

In der Fig. 3 ist die Kraftfahrzeugkarosserie 4 im Falle eines Seitenaufpralls (Seitencrashs) eines Objektes 18 auf eine Seitenfläche des Kraftfahrzeugs 2 gezeigt, wenn der Freiraum 6a leer ist, also wenn die Batteriebaugruppe 10 ohne das Schubfeldelement 16 verbaut werden würde. Wie in der Fig. 3 vergleichsweise deutlich ersichtlich ist, ist das Batteriegehäuse 14 lediglich dreiseitig mittels Befestigungsstellen 20 an der Kraftfahrzeugkarosserie 4 befestigt. Die Befestigungsstellen 20 sind in der Fig. 3 als Kreise dargestellt und lediglich beispielhaft mit Bezugszeichen versehen.

Die Befestigungsstellen 20 sind beispielsweise als Schraubverbindungen ausgeführt. Durch die fehlenden Befestigungsstellen 20 im Bereich des Freiraums 6a reißen die übrigen Verschraubungen während eines Seitenaufpralls unzulässig ab, wodurch die Strukturintegrität des Kraftfahrzeugs 2 nicht mehr gegeben ist. Weiterhin wird die Torsionssteifigkeit oder-festigkeit des Kraftfahrzeugs 2 wesentlich reduziert.

Wie in der Fig. 4 vergleichsweise deutlich ersichtlich ist, ist das Batteriegehäuse 14 mittels des beispielsweise als Schubblech ausgeführten Schubfeldelements 16 mit der Kraftfahrzeugkarosserie 4 nach hinten und/oder seitlich verbunden. Das Schubfeldelement 16 wirkt als ein zusätzlicher Kraftpfad im Falle eines Fahrzeugunfalls oder Fahrzeugaufpralls. Dadurch wird der Freiraum 6a mechanisch versteift und überbrückt, so dass die Strukturintegrität bei einem seitlichen Aufprall des Objekts 18 nicht nachteilig beeinträchtigt ist.

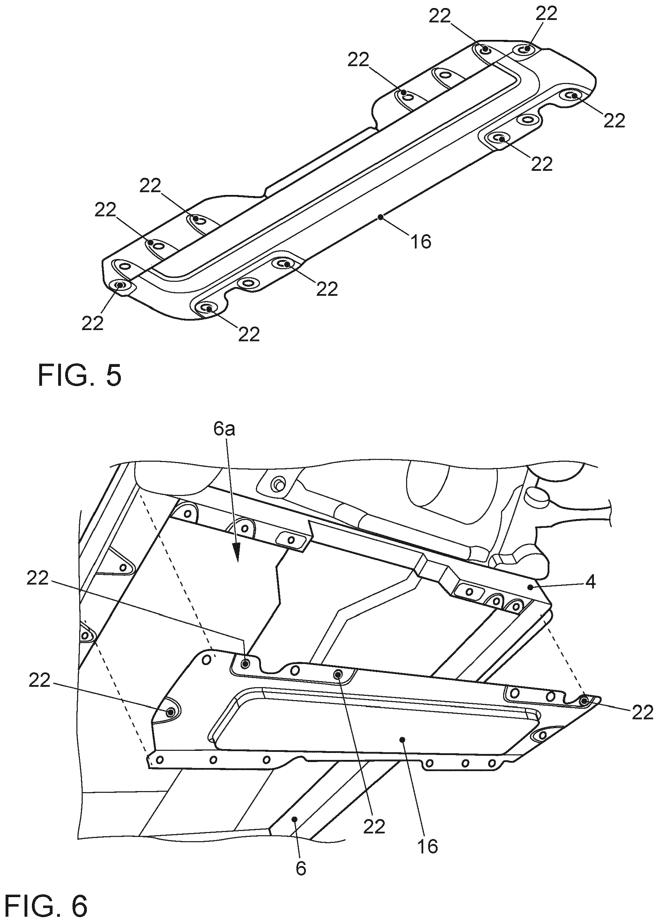

Nachfolgend ist anhand der Fig. 5 bis Fig. 7 ein Ausführungsbeispiel des Schubfeldelements 16 näher erläutert. Das Schubfeldelement 16 weist eine etwa rechteckige Grundform auf, und füllt den Freiraum 6a im eingebauten Zustand etwa vollständig aus. Das Schubfeldelement 16 ist beispielsweise als ein Stanz-Biege-Teil in Form eines Schubblechs ausgeführt, und ist mit nicht näher bezeichneten Konturen und Prägungen versehen, welche einen definierten Kraftpfad und somit eine definierte Verformung im Falle eines Unfalls oder Aufpralls realisieren.

Das Schubfeldelement 16 weist allseitig Befestigungsöffnungen 22 zur Aufnahme von Befestigungsschrauben 24 auf. Das Schubfeldelement 16 wird mittels der Befestigungsschrauben 24 an dem Batteriegehäuse 14 einerseits und an der Kraftfahrzeugkarosserie 4 andererseits angebunden oder gekoppelt. Die Befestigungsöffnungen 22 und Befestigungsschrauben 24 sind in den Figuren lediglich beispielhaft mit Bezugszeichen versehen.

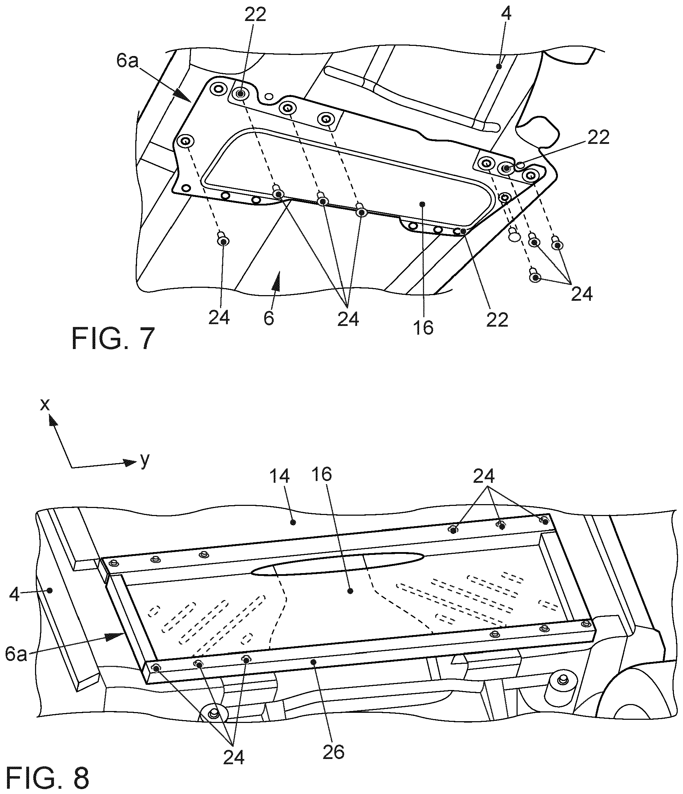

In der Fig. 8 ist ein weiteres Ausführungsbeispiel des Schubfeldelements 16 gezeigt. In dieser Ausführungsform weist das Schubfeldelement 16 eine Rahmenkonstruktion 26 auf. Die Rahmenkonstruktion 26 weist drei Streben oder Profile auf, welche dreiseitig entlang des Innenumfangs des Freiraums 6a angeordnet sind. Zwischen den Streben der Rahmenkonstruktion 26 ist ein Schubfeld, beispielsweise in Form eines Schubblechs, gehalten.

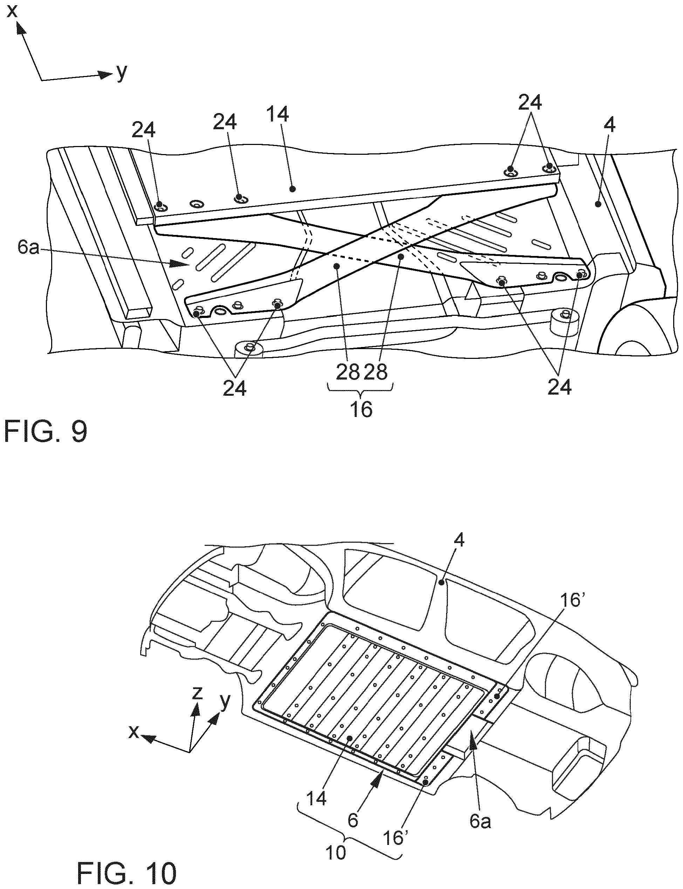

Die Fig. 9 zeigt ein alternatives Ausführungsbeispiel, bei welchem das Schubfeldelement 16 als zwei kreuzende Streben oder Zugbänder 28 ausgeführt ist. Die Zugbänder 28 kreuzen sich hierbei als Raumdiagonalen im Freiraum 6a.

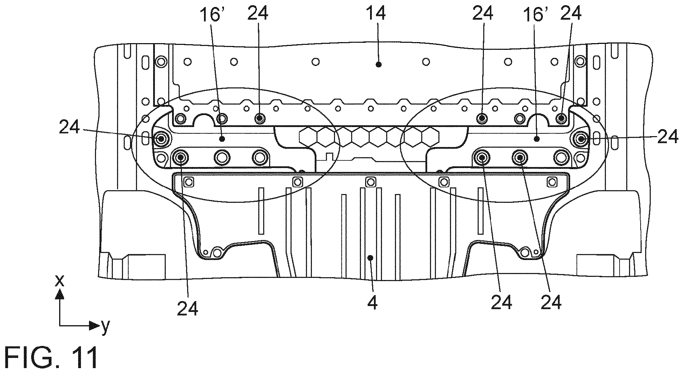

In den Figuren 10 und 11 ist ein weiteres Ausführungsbeispiel dargestellt. In dieser Ausführungsform sind zwei separate Schubfeldelemente 16' als flächige Überbrückung und Versteifung des Freiraums 6a vorgesehen. Mit anderen Worten ist das Schubfeld der Batteriebaugruppe 10 zweiteilig ausgeführt. Die Schubfeldelemente 16' sind hierbei beispielsweise nach Art eines der vorstehend beschriebenen Ausführungsbeispiele ausgestaltet. In dem gezeigten Ausführungsbeispiel sind die Schubfeldelemente 16' insbesondere nach Art des in Fig. 5 bis 7 dargestellten Schubfeldelements 16 ausgebildet.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Kraftfahrzeug
- 4: Kraftfahrzeugkarosserie
- 6: Batteriebauraum
- 6a: Freiraum
- 8, 10: Batteriebaugruppe
- 12, 14: Batteriegehäuse
- 16, 16': Schubfeldelement
- 18: Objekt
- 20: Befestigungsstelle
- 22: Befestigungsöffnung
- 24: Befestigungsschraube
- 26: Rahmenkonstruktion
- 28: Strebe/Zugband

- X: Fahrzeuglängsrichtung
- Y: Fahrzeugquerrichtung
- Z: Fahrzeughöhenrichtung

## Patentansprüche

1. Modulares Batteriebaugruppensystem für den Einbau in einen Batteriebauraum (6) einer Kraftfahrzeugkarosserie (4) eines Kraftfahrzeugs (2), wobei der Batteriebauraum (6) für den Einbau oder die Montage unterschiedlicher Batteriebaugruppen (8, 10) ausgeführt ist, aufweisend
- eine erste Batteriebaugruppe (8) einer hohen Batterieleistungsstufe, mit einem Batteriegehäuse (12), welches den Batteriebauraum (6) im Wesentlichen vollständig ausfüllt, und
- mindestens eine zweite Batteriebaugruppe (10) einer niedrigeren Batterieleistungsstufe,
- wobei die zweite Batteriebaugruppe (10) ein Batteriegehäuse (14) aufweist, in welchem eine Anzahl von Batteriemodulen aufgenommen ist,
- wobei das Batteriegehäuse (14) entlang einer Fahrzeuglängsrichtung (X) eine geringere Abmessung als der Batteriebauraum (6) aufweist, so dass ein Freiraum (6a) im Batteriebauraum (6) gebildet ist,
- wobei ein Schubfeldelement (16, 16') in den Freiraum (6a) eingesetzt ist, und
- wobei das Schubfeldelement (16, 16') den Freiraum (6a) in Fahrzeuglängsrichtung (X) und in Fahrzeugquerrichtung (Y) flächig überbrückt und mechanisch versteift.

2. Batteriebaugruppensystem nach Anspruch 1,
**dadurch gekennzeichnet,**
**dass** das Schubfeldelement (16, 16') an dem Batteriegehäuse (14) und/oder der Kraftfahrzeugkarosserie (4) schraubbfestigt oder schraubbefestigbar ist.

3. Batteriebaugruppensystem nach Anspruch 1 oder 2,
**dadurch gekennzeichnet,**
**dass** das Schubfeldelement (16, 16') als ein Schubblech ausgeführt ist.

4. Batteriebaugruppensystem nach einem der Ansprüche 1 bis 3,
**dadurch gekennzeichnet,**
**dass** das Schubfeldelement (16) eine Rahmenkonstruktion (26) aufweist, welche zumindest dreiseitig entlang des Innenumfangs des Freiraums (6a) angeordnet oder anordenbar ist.

5. Batteriebaugruppensystem nach einem der Ansprüche 1 bis 4,
**dadurch gekennzeichnet,**
**dass** das Schubfeldelement (16) als sich kreuzende Streben oder Zugbänder (28) ausgeführt ist.

6. Batteriebaugruppensystem nach Anspruch 5,
**dadurch gekennzeichnet,**
**dass** das Schubfeldelement (16) als zwei sich diagonal im Freiraum (6a) kreuzende Streben oder Zugbänder ausgeführt ist.

7. Batteriebaugruppensystem nach einem der Ansprüche 1 bis 6,
**dadurch gekennzeichnet,**
**dass** das ein zweites Schubfeldelement (16') als flächige Überbrückung und Versteifung des Freiraums (6a) vorgesehen ist, wobei die Schubfeldelemente (16') entlang einer Fahrzeugquerrichtung (Y) zueinander beabstandet angeordnet oder anordenbar sind.

8. Batteriebaugruppensystem nach einem der Ansprüche 1 bis 7,
**dadurch gekennzeichnet,**
**dass** in dem Batteriegehäuse (14) der zweiten Batteriebaugruppe (10) weniger als zwölf Batteriemodule aufgenommen sind.

9. Elektrisch angetriebenes oder antreibbares Kraftfahrzeug (2) mit einer Kraftfahrzeugkarosserie (4) mit einem Batteriebauraum (6), und mit einer in dem Batteriebauraum (6) montierten Batteriebaugruppe (10) eines Batteriebaugruppensystems nach einem der Ansprüche 1 bis 8.

## Claims

1. Modular battery assembly system for installation into a battery structural space (6) of a motor vehicle body (4) of a motor vehicle (2), wherein the battery structural space (6) is designed for the installation or the mounting of different battery assemblies (8, 10), having
- a first battery assembly (8) of a high battery power level, with a battery housing (12) which substantially completely fills the battery structural space (6), and
- at least one second battery assembly (10) of a relatively low battery power level,
- wherein the second battery assembly (10) has a battery housing (14) in which a number of battery modules are accommodated,
- wherein the battery housing (14) has a smaller dimension along a vehicle longitudinal direction (X) than the battery structural space (6), so that a clearance (6a) is formed in the battery structural space (6),
- wherein a shear panel element (16, 16') is inserted into the clearance (6a), and
- wherein the shear panel element (16, 16') areally bridges and mechanically reinforces the clearance (6a) in the vehicle longitudinal direction (X) and in the vehicle transverse direction (Y).

2. Battery assembly system according to Claim 1, **characterized**
**in that** the shear panel element (16, 16') is screw-fastened or can be screw-fastened to the battery housing (14) and/or the motor vehicle body (4).

3. Battery assembly system according to Claim 1 or 2, **characterized**
**in that** the shear panel element (16, 16') is designed in the form of a metal shear plate.

4. Battery assembly system according to one of Claims 1 to 3,
**characterized**
**in that** the shear panel element (16) has a frame structure (26) which is arranged or can be arranged at least on three sides along the inner periphery of the clearance (6a) .

5. Battery assembly system according to one of Claims 1 to 4,
**characterized**
**in that** the shear panel element (16) is designed in the form of struts or tie members (28) which cross one another.

6. Battery assembly system according to Claim 5, **characterized**
**in that** the shear panel element (16) is designed in the form of two struts or tie members which cross one another diagonally in the clearance (6a).

7. Battery assembly system according to one of Claims 1 to 6,
**characterized**
**in that** the one second shear panel element (16') is provided in the form of an areal bridging and reinforcement of the clearance (6a), wherein the shear panel elements (16') are arranged or can be arranged at a distance from one another along a vehicle transverse direction (Y).

8. Battery assembly system according to one of Claims 1 to 7,
**characterized**
**in that** fewer than twelve battery modules are accommodated in the battery housing (14) of the second battery assembly (10).

9. Electrically driven or driveable motor vehicle (2) having a motor vehicle body (4) with a battery structural space (6), and having a battery assembly (10), which can be mounted in the battery structural space (6), of a battery assembly system according to one of Claims 1 to 8 .

## Revendications

1. Système modulaire de sous-ensembles de batteries destiné à l'installation dans un espace d'installation de batterie (6) d'une carrosserie de véhicule automobile (4) d'un véhicule automobile (2), l'espace d'installation de batterie (6) étant réalisé pour l'installation ou le montage de différents sous-ensembles de batteries (8, 10), présentant
- un premier sous-ensemble de batteries (8) d'un niveau de puissance de batterie élevé, comprenant un boîtier de batterie (12) qui remplit substantiellement entièrement l'espace d'installation de batterie (6), et
- au moins un deuxième sous-ensemble de batteries (10) d'un niveau de puissance de batterie plus faible,
- le deuxième sous-ensemble de batteries (10) présentant un boîtier de batterie (14) dans lequel est reçu un nombre de modules de batterie,
- le boîtier de batterie (14) présentant le long d'une direction longitudinale de véhicule (X) une dimension inférieure à l'espace d'installation de batterie (6) de façon à former un espace libre (6a) dans l'espace d'installation de batterie (6),
- un élément de panneau de cisaillement (16, 16') étant inséré dans l'espace libre (6a), et
- l'élément de panneau de cisaillement (16, 16') comblant en surface l'espace libre (6a) dans la direction longitudinale de véhicule (X) et le renforçant mécaniquement dans la direction transversale de véhicule (Y) .

2. Système de sous-ensembles de batteries selon la revendication 1, **caractérisé en ce que** l'élément de panneau de cisaillement (16, 16') est vissé ou peut être vissé sur le boîtier de batterie (14) et/ou la carrosserie de véhicule automobile (4).

3. Système de sous-ensembles de batteries selon la revendication 1 ou 2, **caractérisé en ce que** l'élément de panneau de cisaillement (16, 16') est réalisé sous la forme d'une tôle de cisaillement.

4. Système de sous-ensembles de batteries selon l'une quelconque des revendications 1 à 3, **caractérisé en ce que** l'élément de panneau de cisaillement (16) présente une structure de cadre (26) qui est disposée ou peut être disposée au moins sur trois côtés le long de la circonférence intérieure de l'espace libre (6a).

5. Système de sous-ensembles de batteries selon l'une quelconque des revendications 1 à 4, **caractérisé en ce que** l'élément de panneau de cisaillement (16) est réalisé sous la forme d'entretoises ou de tirants (28) qui se croisent.

6. Système de sous-ensembles de batteries selon la revendication 5, **caractérisé en ce que** l'élément de panneau de cisaillement (16) est réalisé sous la forme d'entretoises ou de tirants qui se croisent en diagonale dans l'espace libre (6a).

7. Système de sous-ensembles de batteries selon l'une quelconque des revendications 1 à 6, **caractérisé en ce qu'**un deuxième élément de panneau de cisaillement (16') est prévu sous la forme d'un dispositif de comblement en surface et de renfort de l'espace libre (6a), les éléments de panneau de cisaillement (16') étant disposés ou pouvant être disposés à distance les uns des autres le long d'une direction transversale de véhicule (Y).

8. Système de sous-ensembles de batteries selon l'une quelconque des revendications 1 à 7, **caractérisé en ce que** dans le boîtier de batterie (14) du deuxième sous-ensemble de batteries (10) moins de douze modules de batterie sont reçus.

9. Véhicule automobile (2) entraîné électriquement ou pouvant être entraîné électriquement, comprenant une carrosserie de véhicule automobile (4) pourvue d'un espace d'installation de batterie (6) et d'un sous-ensemble de batteries (10) monté dans l'espace d'installation de batterie (6) d'un système de sous-ensembles de batteries selon l'une quelconque des revendications 1 à 8.
